# EUROPÄISCHE PATENTSCHRIFT

(11) **EP 2 607 407 B1**
(45) Veröffentlichungstag und Bekanntmachung des Hinweises auf die Patenterteilung: **20.08.2014**
(21) Anmeldenummer: 11194919.4
(22) Anmeldetag: 21.12.2011
(51) Int. Cl.: C08J 3/22, C08K 3/04, C08J 5/00, C08J 3/21, C08J 3/20, C08L 9/02, C08L 21/00

(54) **Verfahren zur Herstellung von CNT-Masterbatches in Flüssigkautschuk mittels Dreiwalzenwerk**
Method for manufacturing CNT master batches in liquid caoutchouc by means of a three roller device
Procédé de fabrication de mélanges maîtres avec CNT dans du caoutchouc liquide à l'aide d'un appareil à trois cylindres

(43) Veröffentlichungstag der Anmeldung: 26.06.2013
(73) Patentinhaber: Rhein Chemie Rheinau GmbH, 68219 Mannheim (DE)
(72) Erfinder: Schröder, Andreas, 69463 Weinheim (DE); Ziser, Torsten, 69469 Weinheim (DE); Briquel, Luc, 67100 Strasbourg (FR)
(74) Vertreter: Siegers, Britta

(56) Entgegenhaltungen:
- US-A1- 2010 264 376
- US-A1- 2011 233 479
- ROSCA I D ET AL: "Highly conductive multiwall carbon nanotube and epoxy composites produced by three-roll milling", CARBON, ELSEVIER, OXFORD, GB, Bd. 47, Nr. 8, 1. Juli 2009 (2009-07-01), Seiten 1958-1968, XP026104599, ISSN: 0008-6223, DOI: 10.1016/J.CARBON.2009.03.039 [gefunden am 2009-03-25]

## Beschreibung

Die vorliegende Erfindung betrifft ein neues Verfahren zur Herstellung von Carbonnanotubes-haltigen Masterbatches in Flüssigkautschuk unter Verwendung eines Dreiwalzenwerkes.

Unter dem Begriff Masterbatch versteht man in einen polymeren Binder gebundene Additive mit einem Gehalt der Additive, die höher sind als in der Endanwendung.

Unter dem Begriff Flüssigkautschuk versteht man Polymere mit einer mittleren Molaren Masse (Gewichtsmittel) von 500 g/mol bis 200.000 g/mol. Zur Charakterisierung werden oft auch Angaben zur Viskosität gemacht. Diese liegen in der Regel im Bereich von 5000 bis 270000 mPa s, gemessen bei Raumtemperatur (vgl. J. Schnetger Lexikon Kautschuktechnik, Hüthig Verlag Heidelberg 3. überarbeitete Auflage 2004, Seite 168-170) Die Polymere lassen sich zu elastomeren Werkstoffen vernetzen.

Carbonnanotubes (CNT) sind nanoskalige faserförmige Röhrchen aus Kohlenstoffatomen. Kommerziell erhältliche Carbonnanotubes weisen einen Durchmesser von ca. 10 nm auf bei einer Länge von ≥0,1 µm. Aufgrund des nanoskaligen Durchmessers und dem sehr hohen Aspekt von ≥ 10 besitzen diese neuen Materialien ein besonderes Verstärkungspotential für Elastomere und andere Polymere als herkömmliche makroskopische Fasern, wie Carbonfasern oder Aramidfasern sowie sphärische nanoskalige Füllstoffe, wie Ruß oder Kieselsäure. Einzelne CNTs besitzen zudem eine sehr hohe elektrische und thermische Leitfähigkeit sowie eine sehr hohe mechanische Festigkeit.

Kommerziell erhältliche CNTs werden hergestellt über das Chemical Vapour Deposition (CVD)-Verfahren. Die CNTs liegen dabei als pulverförmige verknäulte Agglomerate mit Durchmessern von bis zu 2 mm vor. Um die besonderen Eigenschaften der CNTs in einen polymeren Werkstoff zu übertragen, müssen diese deagglomeriert und vereinzelt werden. Dabei sollen die CNTs idealerweise nicht verkürzt werden. Die Knäuelstruktur dieser makroskopischen Agglomerate und die gleichzeitig sehr hohe Festigkeit dieser nanoskaligen Fasern erschwert die Dispergierbarkeit erheblich, vor allem im Vergleich zu herkömmlichen makroskopischen Fasern oder den sphärischen Füllstoffpartikeln.

In Fällen schlechter Dispergierbarkeit von faserigen oder nanoskaligen pulverförmigen Rohstoffen, wie zum Beispiel Aramidfasern, Ruß und Kieselsäure, hat es sich als vorteilhaft erwiesen, diese zunächst in hochkonzentrierter Form in einen hochviskosen polymeren Binder, wie z.B. Naturkautschuk (NR), Styrolbutadienkautschuk (SBR), Ethylenpropylendienkautschuk (EPDM) Nitrilkautschuk (NBR) vor zu dispergieren. Hierzu werden Extruder oder Innenmischer verwendet. Bei hohen Faser- bzw. Füllstoffkonzentrationen werden höhere Scherkräfte zu Dispergierung generiert. Dieser Masterbatch wird später in einen Kautschuk eingemischt (DE-A-1195941; EP-A 1095961; EP-A 1304347, US-A 6413478).

In den bislang bekannten Verfahren zur Herstellung von CNT-Masterbatches (siehe z.B. EP-A 1 995 274 , WO- 2008047022) werden die CNTs über einen Knetprozess in einen polymeren Binder, wie z.B. Naturkautschuk (NR), Styrolbutadienkautschuk (SBR), Ethylenpropylendienkautschuk (EPDM), in Nitrilkautschuke (NBR) oder auch Fluorkautschuk (FKM) eingebracht. Um homogenere Mischungen herzustellen sind dabei sehr lange Mischzeiten erforderlich [A. Schröder, et al Effect of MWCNT Dispersion in NBR-Compounds, Kautschuk Gummi Kunststoffe 64 (2011) S. 42 bis 46]. Mit zunehmender Mischzeit, d.h. mit zunehmender Homogenität und Dispersion der Füllstoffe sinkt allerdings nachteiligerweise die elektrische Leitfähigkeit (H. H. Le, et al, Kautschuk Gummi Kunststoffe, 62 (2009) S. 326). Die CNTs werden stark verkürzt. Gleichzeitig werden aber selbst nach langen Mischzeiten große verknäulte Agglomerate im Masterbatch gefunden. Große Agglomerate sind Fehlstellen von denen ein Versagen eines Bauteiles mit elastomeren Werkstoffen ausgehen kann [A. Schröder, Kautschuk Gummi Kunststoffe 61 (2008) S. 584 bis 596].

In anderen bislang bekannten Verfahren, z.B. beschrieben in der US-A 20080312364, DE-A 102006055106, WO2009063008, EP 01845124 A1, werden dafür zunächst die CNT-Agglomerate in niedrigviskosere Phase (zum Beispiel Wasser) mit Dispergierhilfsmitteln versetzt und dann dispergiert. Aufgrund der niedrigen Viskosität kann bei diesen Verfahren die eingebrachte Energie gezielt gesteuert werden und so die Dispersion der Agglomerate relativ schonend durchgeführt werden. Die so hergestellten CNT-Masterbatches besitzen ein hohes Verstärkungspotential wahrscheinlich aufgrund einer geringeren Anzahl stark verkürzter CNTs. Diese Verfahren haben allerdings den Nachteil, dass die daraus erhaltenen Masterbatches einen hohen Anteil an Dispergierhilfsmittel enthalten, der sich oft störend im späteren Endprodukt auswirkt.

In EP10186382.7 werden die CNTs in wässriger Phase mit Ultraschall dispergiert, mit Polymerlatex versetzt und koaguliert. Der so erhaltenen Masterbatch wird aufbereitet (getrocknet). Bei diesem Verfahren verbleibt zwar ein deutlich geringerer Anteil an Dispergierhilfsmittel im Masterbatch (Dispergierhilfsmittel ist wasserlöslich), der im Masterbatch verbleibenden Anteil von ca. I Drittel des ursprünglich eingesetzten Anteils wirkt sich aber immer noch störend aus. Zudem ist das eingesetzte Dispergierhilfsmittel relativ teuer. Bei dem in EP10186382.7 beschriebenen Herstellungsverfahren verbleibt zudem viel Wasser im Masterbatch und dieser muss aufwendig getrocknet werden.

Grundsätzlich nachteilig bei allen beschriebenen Verfahren zur Masterbatch-Herstellung ist zudem, dass ausschließlich hochmolekulare Polymere/Kautschuke verwendet werden. Bei hohen Anteilen an Wirkstoff ≥ 10% ist die Viskosität der CNT-Masterbatches bereits sehr hoch und die Masterbatche lassen sich selbst nur sehr schwer in die Elastomermischung einarbeiten, insbesondere wenn der Masterbatch für die Endanwendung nur noch mit weiterem Elastomer verdünnt werden soll. Werden Masterbatches mit niedrigeren CNT-Anteilen hergestellt muss der Endanwender zum einen deutlich mehr Masterbatch kaufen, was einen Kostennachteil darstellt. Zum anderen werden die mechanischen Eigenschaften des elastomeren Endproduktes durch das Binder Material bestimmt. Beides ist nicht erwünscht. Die Viskosität der Masterbatche kann zwar durch Weichmacher erniedrigt werden, dieser reduziert aber die verstärkenden Eigenschaften der CNTs und die Elastizität des Endproduktes.

Daher wird in US2010/0264376 A1 die Herstellung von CNT-Masterbatches mit sehr niedrig viskosen vernetzbaren Polymeren (Flüssigkautschuk) unter Verwendung von Knetprozessen, zum Beispiel mit einem Doppelschneckenextruder, vorgeschlagen. Die Masterbatche mit Flüssigkautschuk besitzen zum einem selbst bei hohen Anteilen an CNTs noch verglichen mit hochvisksosen Kautschuken eine niedrige Viskosität. Zum anderen lassen sich die Kautschuke im Gegensatz zu Weichmachern vernetzen. So lassen sich gute mechanische Eigenschaften des elastomeren Endproduktes erzielen. Nachteilig bei diesem Verfahren ist jedoch, dass insbesondere zu Beginn eines Knet-Prozesses aufgrund der niedrigen Viskosität des Flüssigkautschukes die Knetaggregate oftmals nicht greifen und so keine Scherkräfte aufgebaut werden können. Um dies zu verhindern, können sehr hohe Anteile an CNTs verwendet werden. Bei hohen Anteilen an CNTs werden aber wiederum sehr Scherkräfte aufgebaut, die zum Bruch der CNTs führen. Es wird ein Masterbatch mit stark verkürzten CNTs erhalten. Zum anderen können bei diesem Prozess nicht dispergierte Agglomerate mit > 10 µm nicht ausgeschlossen werden. Große Agglomerate können zur starken Streuung der mechanischen Eigenschaften und gar zum frühzeitigen Bruch der elastomeren Endprodukte führen.

Bekannt aus dem Stand der Technik ist die Einarbeitung von sphärischen Füllstoffen in Flüssigkautschuk auf dem Dreiwalzenwerk [J. Schnetger Lexikon Kautschuktechnik, Hüthig Verlag Heidelberg 3. überarbeitete Auflage 2004, Seite 168-170]. In der Gummiindustrie werden üblicherweise Doppelwalzenwerke mit Spaltbreiten > 0,5 mm verwendet. Im Unterschied zu Doppelwaizenwerke bestehen Dreiwalzenwerke aus einer Aufgabewalze, einer Mittelwalze und einer Abnahmewalze. Im Spalt zwischen Aufgabewalze und Mittelwalze werden Füllstoffe vordispergiert und schmaleren Walzenspalt sehr fein dispergiert. Dreiwalzenwerke besitzen sehr geringe Spaltbreiten bis zu 5 µm. Nach passieren dieses Spaltes können Füllstoff-Agglomerate mit einem Durchmesser größer > 10 µm ausgeschlossen werden. (Bei Aufgabe von viel Material kann sich der Walzenspalt etwas aufweiten) Nicht bekannt ist die Einarbeitung von Fasermaterialien zum Beispiel Carbonnanotubes. Lange Fasern könnten brechen, wenn diese quer in den Walzenspalten geraten. Nachteilig, im Gegensatz zu den in der Gummiindustrie verwendeten Zwei-Walzwerken, ist zudem, dass die Masterbatche mehrmals auf das Dreiwalzenwerk gegeben und wieder abgenommenen müssen, um eine homogene Verteilung der Füllstoffe im Masterbatch zu gewährleisten.

Aufgabe der vorliegenden Erfindung war daher die Bereitstellung eines neuen Verfahrens zur Herstellung von Carbonanotubes-haltigen Masterbatches, über das die CNT Agglomerate schonend dispergiert (geringere Verkürzung der Nanofasern) und schnell homogen in den polymeren Binder eingearbeitet werden können und sich die so erhaltenen Masterbatches sich leicht mit weiteren Kautschuk-haltigen Mischungen verdünnen lassen.

Überraschenderweise wurde nun gefunden, dass sich diese CNT-Agglomerate in hervorragender Weise in Flüssigkautschuk einarbeiten und homogen verteilen lassen, wenn die anschließende Dispergierung der CNT-Agglomerate mit einem Dreiwalzenwerk erfolgt.

Gegenstand der vorliegenden Erfindung ist ein neues Verfahren zur Herstellung von Carbonanotubes-haltigen Masterbatches, dadurch gekennzeichnet, dass mindestens ein Kautschuk mit einer mittleren molaren Masse (Gewichtsmittel) von 500 bis 200.000 g/mol, mit den Carbonanotubes bei T ≥ 0 °C, bevorzugt > 60°C besonders bevorzugt > 100°C vermischt wird und anschließend die Carbonnanotubes mit einem Dreiwalzenwerk mit Spaltbreiten ≤ 120 µm, bevorzugt ≤ 40 µm, besonders bevorzugt ≤ 13 µm, ganz besonders bevorzugt ≤ 5 µm dispergiert werden. Die Carbonnanotubes liegen dabei vorzugsweise in Form von Agglomeraten vor. Dabei handelt es sich um Agglomerate, vorzugsweise pulverförmige Agglomerate, mit Durchmessern von bis zu 2 mm.

Die nach dem erfindungsgemäßen Verfahren hergestellten CNT-haltigen Masterbatches zeichnen sich überraschenderweise selbst bei hohen Anteilen an CNT's > 5% durch eine geringe Mooney-Viskosität (von kleiner < 100 MU bei 100°C, bevorzugt < 80 MU, besonders bevorzugt < 50 MU) des Masterbatches und dadurch bedingt durch eine gute Einmischbarkeit in Kautschuk-haltigen Mischungen aus.

Carbonanotubes-haltige Masterbatches im Sinne der Erfindung enthalten vorzugsweise 5 bis 50 Gew.-% Carbonnanotubes und 20 bis 95 Gew.-% Flüssigkautschuk. In einer bevorzugten Ausführungsform der Erfindung beträgt der Anteil an Carbonnanotubes im Masterbatch bevorzugt mehr als 10 Gew. %, besonders bevorzugt mehr als 20 Gew.-%. Der Anteil der CNTs ist dabei größer als in der Kautschuk-haltigen Mischung. Die Masterbatche enthalten dabei keine CNT-Agglomerate > 130 µm, bevorzugt > 50 µm, besonders bevorzugt > 10 µm.

Bei den Carbonnanotubes, die im Sinne der Erfindung eingesetzt werden können, handelt es sich um alle gängigen CNT's, vorzugsweise single-wall, double wall, multi-wall, etc. Diese sind kommerziell verfügbar, z. B. bei der Firma Bayer MaterialScience AG oder Nanocyl s.a., oder können nach den, dem Fachmann geläufigen Chemical Vapour Deposition Verfahren oder anderen Verfahren hergestellt werden. Die Carbonnanotubes weisen eine Länge von mehr als 0,1 µm bevorzugt mehr als 1 µm auf. Der äußere Durchmesser liegt zwischen 5 nm und 50 nm. In einer bevorzugten Ausführungsform der Erfindung können funktionalisierte Carbonnanotubes verwendet werden. Bevorzugt sind -NH2 und -COOH Funktionalisierungen. Diese funktionalisierten Carbonnanotubes sind beispielsweise erhältlich bei FutureCarbon GmbH.

Bei den Kautschuken (Flüssigkautschuken), die im Sinne der Erfindung eingesetzt werden, handelt es sich um flüssige mit den Vernetzungsmitteln der Kautschuk-haltigen Mischung vernetzbare Polymere mit einer mittleren Molaren Masse (Gewichtsmittel) von 500 bis 200.000 g/mol, bevorzugt von 500 bis 100.000 g/mol, besonders bevorzugt von 500 bis 50.000 g/mol, ganz besonders bevorzugt von 500 bis 20.000 g/mol, sog. Flüssigkautschuke. Die mittlere Molare Masse (Gewichtsmittel) kann mit den, dem Fachmann bekannten Verfahren zum Beispiel mit der Gelpermeations-Chromatografie, der Viskosimetrie (rheologisches Verhalten in Lösung) oder der Lichtstreuung ermittelt werden.

Bei den Flüssigkautschuken handelt es sich vorzugsweise um nicht vernetzte Polymere ausgewählt aus der Gruppe: Isoprenkautschuk (IR), hydrierte Isoprenkautschuke, Styrol-Butadien-Kautschuk (SBR), Butadienkautschuk (BR), Isopren-Isobutylen-Kautschuk (IIR), Polychloroprenkautschuk (CR), Acrylnitril-Butadien-Kautschuk (NBR), hydrierter Acrylnitril-Butadien-Kautschuk (HNBR), Ethylen-Propylen-Dien-Kautschuk (EPDM), Ethylen-Propylen-Kautschuk (EPM), Silikonkautschuke (VMQ) und/oder Fluorkautschuke (FKM).

Bevorzugt sind Nitrilkautschuke NBR und HNBR, zum Beispiel erhältlich unter dem Markennamen Nipol® 1312, Nipol® 1312 LV bei der Firma ZEON Europe GmbH oder bei der Firma Lanxess Deutschland GmbH, EPDM-Kautschuke, zum Beispiel erhältlich unter den Markenamen Trilene® 65, Trilene® 67, Trilene® CP80 bei der Firma Lion Copolymer LLC., EPM-Kautschuke z.B. erhältlich unter dem Markennamen Keltan®1200A bei der Firma Lanxess Elastomers BV, IR-, hydrierte Isoprenkautschuke, BR- und SBR, zum Beispiel erhältlich unter den Markennamen LIR-30, LIR-50, LIR, 310, LIR-390, LIR-200, LIR-230, LIR-290, LBR-307, LBR-305, LBR-300, LSBR-820 bei der Firma Kuraray Europe GmbH, IIR, zum Beispiel erhältlich unter den Markenamen Kalene® 800, Kalene® 1300 bei Royal Elastomers und FKM-Kautschuke erhältlich unter den Markennamen DAI.el.RTM G-101 bei Daikin Chemical Europe GmbH. Die Silikon-Kautschuke (VMQ) sind beispielsweise erhältlich unter dem Markennamen Silopren® U10 bei der Firma Momentive Performance Materials Inc.

Die Flüssigkautschuke können einzeln aber auch als Gemisch eingesetzt werden.

In einer weiteren bevorzugten Ausführungsform der Erfindung werden als Flüssigkautschuke funktionalisierte Flüssigelastomere, ganz besonders bevorzugt endgruppenfunktionalisierte Flüssigkautschuke eingesetzt. Dabei handelt es sich vorzugsweise um -OH, -COOH, -SH, -NCO, -Cl, -Br und F-haltige Gruppen.

Auch bei den funktionalisierten und endgruppenfunktionalisierten Flüssigkautschuken handelt es sich um kommerziell verfügbare Substanzen, die z.B. bei der Firma Kuraray unter den Markennamen LIR-403, LIR-410, bei der Firma Emerald Performancew Materials, LLC unter den Markennamen Hycar® CTB, Hycar® CTBN, Hycar® CTBNX und Cray Valley unter den Markennamen Poly bd R 20 LM®, Poly bd R 45 HTLO erhältlich sind.

Zum Vermischen der CNTs, vorzugsweise der CNT-Agglomerate im Flüssigkautschuk können alle dem Fachmann bekannten handelsüblichen Rührwerke verwendet werden, zum Beispiel mit einem Dissolver der Firma Pendraulik GmbH oder mit einem Dispermat® R der Firma VMA Getzmann GmbH.

Bei den Dreiwalzenwerken handelt es sich um handelsübliche Aggregate, die z.B. bei der Firma Exakt GmbH bezogen werden kann.

In einer Ausführungsform der Erfindung wird die Mischung aus Carbonnanotubes und Flüssigkautschuk auf die Aufgabewalze des Dreiwalzenwerkes gegeben und im Walzenspalt zwischen Mittel und Aufgabewalze vordispergiert. Über die Mittelwalze wird der CNT-haltige Masterbatch zum Walzenspalt zwischen Mittel- und Abnahmewalze transportiert und dort dispergiert und anschließend von der Abnahmewalze abgenommen.

Dabei sind alle Spaltbreiten des Dreiwalzenwerkes einsetzbar. Bevorzugt sind jedoch Spaltbreiten zwischen 5 und 120 µm. Bevorzugt ist der Walzenspalt zwischen Mittel- und Abnahmewalze schmaler als der Walzenspalt zwischen Aufnahme- und Mittelwalze. In einer Ausführungsform der Erfindung erfolgt die Dispergierung in einem Dreiwalzenwerk mehrstufig, bevorzugt dreistufig. In einer weiteren bevorzugten Ausführungsform der Erfindung werden bei der mehrstufigen Dispergierung unterschiedliche Spaltbreiten bei jeder Stufe benutzt. Besonders bevorzugt nimmt die Spaltbreite mit der Zahl der Durchläufe ab. Besonders bevorzugt nimmt die Spaltbreite mit jedem Spaltdurchgang um einen Faktor ≥ 1,5, ganz besonders bevorzugt um einen Faktor ≥ 3 ab. Bevorzugt beträgt die kleinste Spaltbreite des Prozesses ≤ 40 µm, besonders bevorzugt ≤ 13 µm, ganz besonders bevorzugt ≤ 5 µm. Bevorzugt beträgt die Drehzahl der Abnahmewalze ≥ 100 U/min, besonders bevorzugt ≥ 200 U/min., ganz besonders bevorzugt ≥ 300 U/min. Vorzugsweise beträgt das Drehzahlverhältnis 1:3:9, wobei die Abnahmewalze die größte Drehzahl besitzt.

In einer besonders bevorzugten Ausführungsform der Erfindung erfolgt die Dispergierung einstufig mit einer Drehzahl der Abnahmewalze ≥ 300 U/min. und einem Walzenspalt zwischen Mittel- und Abnahmewalze ≤ 10 µm.

Die Temperatur des Kautschuks im erfindungsgemäßen Verfahren beträgt vorzugsweise 0 - 200°C besonders bevorzugt > 60°C, ganz besonders bevorzugt > 100°C sowohl für das Vermischen im Knet- und/oder Rühraggregat als auch auf dem Dreiwalzenwerk, wobei die optimale Temperatur von dem eingesetzten Flüssigkautschuk abhängig ist.

In einer weiteren Ausführungsform der vorliegenden Erfindung werden zusätzlich Festkautschuke, Füllstoffe, Alterungschutzmitteln, Verarbeitungshilfsmitteln, Abbaumittel, Verstärkungsmitteln und/oder Weichmacher beigefügt.

Bei den Festkautschuken im Sinne der Erfindung handelt es sich vorzugsweise um vernetzbare Polymere (Kautschuke) mit einer Mooney-Viskosität [ML1+4] bei 100°C > 10 MU. Das mittlere Molare Masse der Festkautschuk ist vorzugsweise > 200.000 g/mol Dabei handelt es sich vorzugsweise um Naturkautschuk (NR), Isoprenkautschuk (IR), Styrol-Butadien-Kautschuk (SBR), Butadienkautschuk (BR), Isopren-Isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxylierter Acrylnitril-Butadien-Kautschuk (HXNBR), Ethylen-Propylen-Dien-Kautschuk (EPDM), Ethylen-Propylen-Kautschuk (EPM), Fluorkautschuk (FKM), Perfluorierter Fluorkautschuk (FFKM), Acrylat-Ethylen-Kautschuk (AEM), Acrylatkautschuk (ACM), Ethylen-Methylen-Acrylatkautschuk (EMA), chloriertes Polyethylen, chlorsulfoniertes Polyethylen, Ethylen-Vinylacetat-Kautschuk (EVA), Ethylen-Epichlorhydrin Kautschuk (ECO), Epichlorhydrin-Kautschuk (CO) und/oder Polyurethan-Kautschuk (PU), die einzeln oder im Gemisch eingesetzt werden.

Bei den Festkautschuken handelt es sich um handelsübliche Polymere, die z. B. erhältlich sind bei der Firma LANXESS Deutschland GmbH.

Bei den Füllstoffen handelt es sich vorzugsweise um helle anorganische Füllstoffe, vorzugsweise Glimmer, Kaolin, Kieselerde, Kieselsäure, Kreide, Talkum, Zinkoxid, Magnesiumoxid, Calciumoxid, Kohlenstoff-Füllstoffe, vorzugsweise Ruß, Graphit, Graphene, magnetisierbare Füllstoffe wie Carbonyl-Eisenpulver, Eisenoxide, Ferrite und/oder Fasern vorzugsweise. Aramidfaserpulpe, Kohlefasern. Dabei handelt es sich um handelsübliche Verbindungen.

Alterungsschutzmittel im Sinne der Erfindung sind z.B. verfärbende und nicht verfärbende Alterungsschutzmittel, vorzugsweise Paraphenylendiamine, Isopropylphenylparaphenylendiamin (IPPD), Para-Phenylen-Diamin (6PPD), N,N-ditoly-p-phenylendiamine (DTPD), etc., Amine, vorzugsweise Trimethyl-1,2-dihydrochinolin (TMQ), (Phenyl)amine]-1,4-naphthalendion (PAN), Bis(4-octylphenyl)amin (ODPA), styrolisiertes Diphenylamin (SDPA), Mono- und Bisphenole, vorzugsweise. 2,2'-Methylen-bis-(4-methyl-6-tert.butylphenol(BPH), 2,2'-Isobutyliden-bis-(4,6-dimethyl-phenol) (NKF), 2,2'-Dicyclo-pentadienyl-bis-(4-methyl-6-tert.-butyl-phenol) (SKF), 2,2'-Methylen-bis-(4-methyl-6-cyclohexyl-phenol (ZKF), 2,6-Di-tert.-butyl-p-kresol (BHT), substituiertes Phenol (DS), styrolisierte Phenole (SPH), Mercatopbenzimidazole, vorzugsweise 2-Mercaptobenzimidazol (MBI), 2-Mercaptomethyl-benzimidazole (MMBI), Zink-4- und -5-methyl-2-mercapto-benzimidazole (ZMMBI), etc..

Bei den Verarbeitungshilfsmitteln handelt es sich um dem Fachmann bekannte oberflächenaktive Substanzen, die die Grenzflächenspannung zwischen der Komponente, die dispergiert werden soll, und dem Dispersionsmedium herabsetzen. Dabei bevorzugt sind Fettsäuren, Metallseifen, Fettsäurederivate, Fettsäureester, Fettsäureamide und Fettalkohole sowie Kohlenwasserstoffharze und niedermolekulare Kohlenwasserstoffe mit weniger als 100 Kohlenstoffatomen.

Abbaumittel im Sinne der Erfindung sind organische Katalysatoren, die durch starke Erhöhung der Konzentration von Startradikalen in Gegenwart von Sauerstoff bei erhöhter Temperatur einen Polymerabbau ermöglichen, wie zum Beispiel Thiophenole, Zinkseifen, Aryldisulfide, Peroxide, Metallkomplexe, Derivate von Thiocarbonsäuren, Hydrazinderivate.

Bei den Verstärkungsmitteln handelt es sich um Polymerharze und Phenolharze.

Bei den Verarbeitungshilfsmittel und Abbaumitteln handelt es sich um handelsübliche Chemikalien, wie Aflux® 16, Aflux® 18, Aflux® 25, Aflux® 37, Aflux® 42, Aflux® 43, Aflux® 54, Aktiplast®, Aktiplast®GT, Aktiplast® PP, Aktiplast® ST, Aktiplast® T, Aktiplast®8, Aktiplast®F, Aktiplast®M, Aktiplast® MS, Rhenosin® 145, Rhenosin® A, Rhenosin® RB, Antilux® erhältlich bei der Firma RheinChemie Rheinau GmbH.

Bei den Weichmachern im Sinne der Erfindung handelt es sich um Mineralölweichmacher, vorzugsweise naphthenische, paraffinische und/oder aromatische Weichmacher, um synthetische Weichmacher, vorzugsweise Thioester, Phthalsäureester, Alkylsulpfonsäureester, Adipinsäureester, Sebacinsäurester, Dibenzylether, aromatsiche Polyether, Polyglycolether, Phosphorsäureester und/oder Chlorparaffine. Bei den Weichmachern handelt es sich um handelsübliche Substanzen, wie z.B. Rhenosin® W 90 B Rhenosin® 759, Rhenosin® W95, Rhenosin® RC-100, Rhenosin® FH70 und Rhenosin® BA, erhältlich sind bei RheinChemie Rheinau GmbH

Die Menge an Festkautschuken, Füllstoffen, Verarbeitungshilfsmitteln, Abbaumitteln und Weichmachern beträgt in Summe vorzugsweise weniger als 50 Gew.% besonders bevorzugt weniger als 10 Gew.% ganz besonders bevorzugt weniger als 1 Gew.% bezogen auf den Masterbatch.

In einer bevorzugten Ausführungsform der Erfindung wird der Masterbatch nach der Dispergierung auf dem Dreiwalzenwerk in einem Innenmischer oder Extruder homogenisiert. In einer besonders bevorzugten Ausführungsform der Erfindung wird bei der Homogenisierung des Masterbatches in einem Innenmischer oder Extruder mit Festkautschuk und/oder Füllstoff versetzt.

In dem erfindungsgemäßen Verfahren ist die kontinuierliche Fahrweise bevorzugt.

Die nach dem Verfahren hergestellten CNT-haltigen Masterbatches werden vorzugsweise für die mechanische Verstärkung, zur Verbesserung der elektrischen und/oder der thermischen Leitfähigkeit von Elastomeren eingesetzt. Deshalb eignen diese sich für den Einsatz in Reifen, Förderbändern, Antivibrationsbauteilen, Ohrringe, Dichtungen etc..

Hierfür werden diese Carbonnantubes-haltigen Masterbatches mit mindestens einem anderen Kautschuk und gegebenenfalls weiteren Füllstoffen, Weichmachern, Verarbeitungshilfsmitteln und Vernetzungsmitteln vermischt (verschnitten).

Das Verschneiden der Carbonnanotubes-haltigen Masterbatches wird nach den, dem Fachmann geläufigen Verfahren durchgeführt. Vorzugsweise wird dabei die Kautschukmischung in zwei Stufen mittels Innenmischer und/oder Zweiwalzenstuhl hergestellt. In der ersten Stufen werden die Kautschuke gegebenenfalls mit weiteren Füllstoffen, Weichmachern, Alterungsschutzmitteln, Verarbeitungswirkstoffen und den Carbonnanotubes-haltigen Masterbatches hergestellt. In einer zweiten Mischstufe werden die Vernetzungsmittel hinzugefügt. Besonders bevorzugt werden die Carbonnanotube-haltigen Masterbatches am Ende der 1. Mischstufe bei Temperaturen oberhalb von 120°C hinzugefügt, um eine schonende Einarbeitung der Masterbatches zu gewährleisten.

Vernetzungsmittel im Sinne der Erfindung sind:
Netzknotenbildner, vorzugsweise
   - Schwefel (löslich oder unlöslich) und/oder Schwefelspender, vorzugsweise Dithiomorpholine (DTDM), Tetramethylthiuramdisulphide (TMTD), Tetraethylthiuramdisulphid (TETD), Dipentamethylenthiuramterasulphide (DPTT), Phosphorylpolysulfide, vorzugsweise Rhenocure® SDT/S der Firma RheinChemie Rheinau GmbH und/oder
   - Peroxide, vorzugsweise Di-tert.Butyl-Peroxide, Di-(tert.-Butyl-Peroxy-Trimethyl-Cyclohexane, Di-(tert,Butyl-Peroxy-Isopropyl)benzene, Dicumyl-Peroxide, Dimethyl-Di(tert.Butyl-Peroxy)Hexine, Butyl-Di-(tert,Butyl-Peroxy-)Valerate,
   - Resorcinol, Aldehyd-Amin-Kondensationsprodukte, vorzugsweise Hexamethylentetramine, Resorcinol-Formaldehyd-Vorkondensate und/oder Vulkanisationsharze, wie zum Beispiel Halomethylphenolharz,
   - Chinondioxime,
   - Bisphenole,
Beschleuniger, vorzugsweise.
   - Carbamate bzw. Triazine, vorzugsweise Hexamethylen-diamin-carbamat (HMDC), organische Triazine,
   - Thiazole, vorzugsweise 2-Mercapto-benzothiazol (MBT), Zink-mercaptobenzothiazol (ZnMBT), Thiadiazole (TDD),
   - Sulfenamide, vorzugsweise Cyclohexyl-benzothiazol-Sulphenamide (CBS), Di-benzothiazyl-disulphid (MBTS), Butyl-benzothiazole-Sulphenamide (TBBS), Dicyclohexyl-Benzothiazol-Sulphenamid (DCBS), 2-(4-Morpholinylmercapto)-benzothiazol (MBS),
   - Thiurame, vorzugsweise Tetramethyl-thiuram-monosulphid (TMTM), Tetraethyl-thiuram-disulphid (TETD), Tetramethyl-thiuram-disulphid (TMTD), Tetrabenzylthiuram Disulphid (TBTD), Dipentamethylene-Thiuram-Tetra(Hexa)-Sulphid (DPTT),
   - Dithiocarbamate, vorzugsweise Zn-Dimethyldithiocarbamate (ZDMC), Cu-Dimethyldithiocarbamate, Bi- Dimethyldithio-carbamate, Zn-Diethyldithiocarbamate (ZDEC), Tellurdiethyldithio-carbamate (TDEC), Zn-Dibuthyldithiocarbamate (ZDBC), Zn-Ethyl-Phenyl-Dithiocarbamate (ZEPC), Zn-Dibenzyl-Dithiocarbamate (ZBEC), Ni-Dibuthyl-Dithiocarbamate (NBC), Selen diethyldithiocarbamate (SeEDC), Selendimethyldithiocarbamate (SeDMC), Tellur diethyldithiocarbamate (TeEDC),
   - Thiophosphat- und Dithiophosphat, vorzugsweise Zink-O,O-di-n-butyl-dithiophosphat (ZBDP), Zink-O-butyl-O-hexyl-dithiophosphat, Zink-O,O-diisooctyl-dithiophosphat (ZOPD), Dodecylammonium-diisooctyl-dithiophosphat (AOPD), vorzugsweise. die Rhenogran®-Typen ZDT, ZAT, ZBOP der Firma RheinChemie Rheinau GmbH,
   - Harnstoff/Thioharnstoffe, vorzugsweise Ethylenthioharnstoff (ETU), N,N,N'N'-Tetramethyl-thioharnstoff (TMTU), Diethylthioharnstoff (DETU), Dibutylthioharnstoff (DBTU), 3-(3,4-Dichlorphenyl)-1,1-dimethylharnstoff (Diuron) etc., und/oder
   - Xanthogenatbeschleuniger, vorzugsweise Zinkisopropylxanthogenat (ZIX),
   - Guanidine, wie z.B. Diphenylguanidin (DPG) und/oder N',N-di-ortho-tolyl-Guanidin (DOTG) und die Guanidine-frei Ersatzbeschleuniger, vorzugsweise Rhenogran ® XLA 60
Verzögerer, vorzugsweise
   - N-Nitrososdiphenylamin, N-Cylcohexylthiophthalimid (CPT), vorzugsweise Vulkalent® G), Sulfonamidderivate (vorzugsweise Vulkalent ® E/C), Phthalsäureanhydrid (Vulkalent® B/C), wobei die Vulkalent®- Typen beider der Firma Lanxess Deutschland GmbH erhältlich sind, sowie Benzoesäureanhydrid.

Ein weiterer Gegenstand der Erfindung ist die Verwendung der nach dem erfindungsgemäßen Verfahren hergestellten Carbonnanotube-haltigen Masterbatches als Additiv zur mechanischen Verstärkung, als Additiv zur Erhöhung der elektrischen und/oder thermischen Leitfähigkeit von Elastomeren.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei auf diese beschränkt zu sein.

### Ausführungsbeispiele

Es wurden die folgenden Einsatzstoffe verwendet:
**Baytubes**®**C150P = CNT** mehrwandige Carbon-Nanotubes (CNT) der Firma Bayer MaterialScience AG.
**Printex**® **XE2 = Leitfältigkeitsruß,** erhältlich bei der Firma Orion Engineered Carbon GmbH
**NBR-Latex** = NBR-Latex mit 18,9% Perbunan® 2870 F (Feststoffanteil),
**Perbunan**® **2870 F= NBR -Kautschuk** mit einem Acrylnitrilanteil von 28% und einer Mooney-Viskosität von ML(1+4) bei 100°C von ca. 70 MU, erhältlich bei Lanxess Deutschland GmbH.
**Perbunan**® **2831 F= NBR -Kautschuk** mit einem Acrylnitrilanteil von 28% und einer Mooney-Viskosität von ML(1+4) bei 100°C von ca. 31 MU, erhältlich bei Lanxess Deutschland GmbH
**Perbunan**® **28120 F= NBR-Kautscliuk** mit einem Acrylnitrilanteil von 28% und einer Mooney-Viskosität von ML(1 +4) bei 100°C von ca. 120 MU, erhältlich bei Lanxess Deutschland GmbH.
**Nipol**® **1312 = Flüssig NBR-Kautschuk** mit einem Acrylnitrilanteil von 28% und einer Brookfield visc. von 20000 bis 30000 cP, erhältlich bei der Firma Zeon Europe GmbH.
**Perlcadox**® **14-40B-GR** = Di(tert-butylperoxyisopropyl)benzol als Vernetzer, erhältlich bei Akzo Nobel N.V.

### Beispiel 1: Herstellung von CNT-Masterbatches mit Flüssigkautschuk im Innenmischer (nicht erfindungsgemäß)

Der Flüssig-NBR-Kautschuk Nipol® 1312 wurde auf ca. 60 bis 65°C erwärmt, um die Viskosität noch etwas zu erniedrigen. In diesen erwärmten Flüssigkautschuk wurden sukzessive pulverförmige CNTs mit einem Spatel eingerührt, so dass am Ende ein staubfreier Vorbatch mit 25-Gew.-% CNTs erhalten wurde. Aufgrund der Konsistenz und der geringen Viskosität des CNT/NBR-Vorbatches konnte dieser Vorbatch nicht weiter in einem 1,5 l Innenmischer der Firma Gumix S.A. erarbeitet werden.

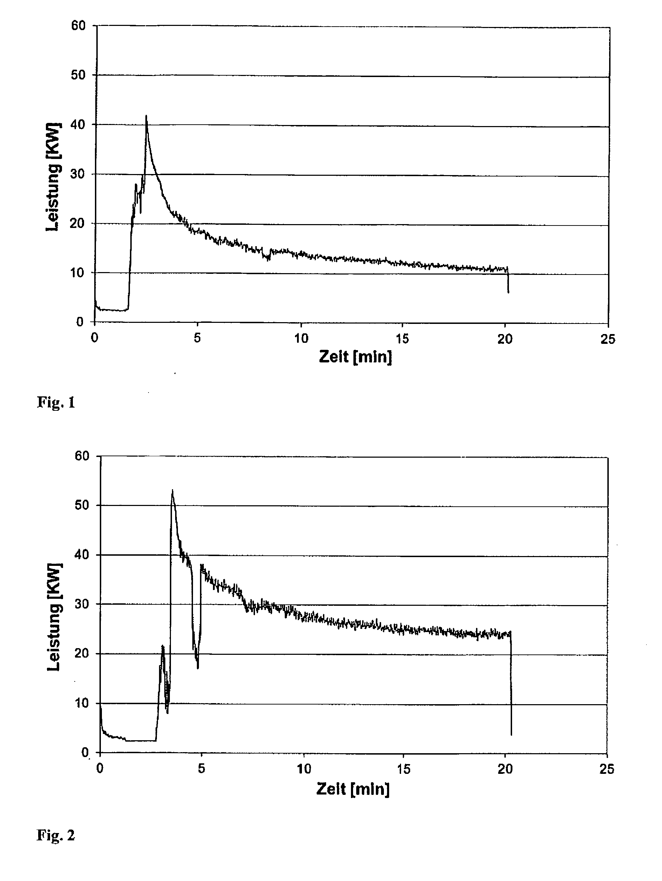

NBR-Kautschuk Perbunan® 28120 F wurde im Innenmischer vorgelegt. Dieser Kautschuk hat eine deutlich höhere Viskosität, sodass die Kneterschaufeln besser greifen können. Der zuvor hergestellte Vorbatch wurde so mit Perbunan® 28120 F versetzt, dass ein 20 Gew.% (MB1.3) und ein 10 Gew.% CNT-haltiger Masterbatch (MB 1.3) erhalten wurde. Die Temperierung des Kneters betrug dabei 50°C, die Drehzahl 50 U/min und der Füllgrad 75%. Die Mischzeit betrug ca. 20 min. In Fig. 1 ist die Leitungskurve des Innenmischers für den 20%-igen Masterbatch MB1.2, in Fig. 2 ist die Leistungskurve für den 10%-igen Masterbatch MB 1.3 dargestellt. Obwohl der 10%-ige Masterbatch MB 1.3 weniger Füllstoff enthält, ist die Leistungsaufnahme nach ca. 20 min. Mischzeit mit ca. 25 kW deutlich größer deutlich größer als beim 20%-igen Masterbatch MB 1.2 mit ca. 11 kW (Fig. 1). Der 20%-ige Masterbatch MB1.2 enthält deutlich mehr des niedrigviskosen Flüssigkautschuks Nipol® 1312. Es kann daher insgesamt weniger Energie zur Dispergierung der verknäulten CNT-Agglomerate aufgenommen werden.

Dies zeigt sich ebenfalls in der Mooney-Viskosität bei 50°C und 100°C in Tabelle 1. Durch einen hohen Anteil an Nipol® 1312 ist die Mooney-Viskosität sehr niedrig. Die Mooney-Viskosität des Vorbatches MB1.1 konnte nicht bestimmt werden, da diese unterhalb der unteren Auflösungsgrenze des Mooney-Viskosimeters liegt.

**Tab. 1**

| | | MB1.1 | MB1.2 | MB1.3 |
|---|---|---|---|---|
| Baytubes® C150P | [Gew.-%] | 25 | 20 | 10 |
| Nipol® 1312 | [Gew.-%] | 75 | 60 | 30 |
| Perbunan 28120 F | [Gew.-%] | 0 | 20 | 60 |
| ML1+4(50°C) | [MU] | << 10* | 53 | 90 |
| ML1+4 (100°C) | [MU] | <<10* | 29 | 44 |

| | | | | |
|---|---|---|---|---|
| * nicht messbar MB= Masterbatch | | | | |

Dieses Beispiel zeigt eindeutig, dass herkömmliche Mischaggregate, wie Innenmischer, nicht geeignet sind, um hohe Scherenergien für die Dispergierung von CNT-Agglomeraten in Flüssigelastomeren aufzubringen.

### Beispiel 2: Herstellung von CNT-Masterbatches mit hochviskosem Festkautschuk Perbunan® 2870F mit dem Dreiwalzenwerk (nicht erfindungsgemäß)

Um staubfreie CNT-Vorbatches herzustellen wurde CNT-Pulver (30 Gew.-%) mit NBR-Latex (70 Gew.-%) mit einem Spatel vermischt. Durch Zugabe der CNT Pulver koagulierte der Latex, da das CNT-Pulver das Wasser aufsaugte. Es entstand eine feuchte, zähe Masse. Diese feuchte, zähe Masse wurde zu weiterem Perbunan® 2870 F in den Innenmischer gegeben und für ca. 10 min im Innenmischer eingearbeitet bis das Wasser bei einer Temperierung von 100°C nahezu vollständig verdampft war. Es wurde bei 50 U/min. gearbeitet. Der Füllgrad des Innenmischers betrug 75% bezogen auf den Feststoffanteil (ohne Wasser). Auf diese Art und Weise wurden drei Vorbatches für MB2.1 bis MB2.3 mit 10%, 20% und 25% CNTs erhalten (vgl. Tabelle 2). Diese Vorbatche wurde ein weiteres Mal auf ein Zweiwalzenwerk der Firma Rubicon Gummitechnik und Maschinenbau GmbH gegeben und zu Fellen mit 6 mm Dicke ausgeformt. Aus den Fellen wurden Streifen geschnitten. Die einzelnen Vorbatche für MB2.1 bis MB2.3 hatten ein Gewicht von jeweils ca. 1 kg.

Zur weiteren Verbesserung der Verarbeitbarkeit von Festkautschuken wurden diese Vorbatche über Nacht auf 100°C getempert. Danach wurden die Vorbatche über ein Dreiwalzenwerk der Firma EXAKT Advanced Technologies GmbH bei Raumtemperatur mit den in Tabelle 2 angegebenen Spaltbreiten für die Durchgänge 1 bis 3 gegeben: Zunächst wurden die Streifen zwischen der Aufgabewalze und der mittleren Walze eingezogen (120 µm Spaltbreite beim ersten Durchgang). Der Masterbatch haftet an der Unterseite der mittleren Walze und wird zum zweiten Walzenspalt (40 µm beim ersten Durchgang) transportiert. Das Abnehmersystem (Messer) nimmt den Masterbatch von der Abnehmerwalze. Das Geschwindigkeitsverhältnis der drei Walzen (Aufgabewalze, Mittelwalze, Abnahmewalze) betrug dabei 1:3:9. Die Umlaufgeschwindigkeit betrug 100 U/min für die Abnahmewalze. Die Masterbatches wurden jeweils dreimal über das Dreiwalzenwerk gegeben. Die eingestellten Spaltbreiten sowie alle weiteren Parameter, inklusive der Messergebnisse sind in der Tabelle 2 dargestellt.

Nach jedem Walzendurchgang wurde eine Probe entnommen und die rheologischen Eigenschaften mit dem RPA2000 von Alpha Technologies getestet. Hierzu wurde bei 100°C und einer Frequenz von 0,5 Hz die Dehnungsamplitude schrittweise von ca. 0,3% bis auf ca. 950% erhöht. Die Messung dieses Strainsweeps wurde sofort nach Abschluss der ersten Messung noch einmal wiederholt.

Die Speichermoduli des zweiten Strainsweeps sind bei 1%, 10%, 100% Dehnungsamplitude in der Tabelle 2 dargestellt, Mit steigendem Anteil an CNTs im Masterbatch nehmen die Speichermoduli G' bei allen Deghnungsamplituden zwischen 1% und 100% zu, entsprechend einer zunehmenden Verstärkung durch mehr CNTs zu. Änderungen sind zwischen den einzelnen Durchgängen mit abnehmenden Spaltbreite nicht zu erkennen. Offenbar werden auch im Dreiwalzenwerk schon bei relativ großen Spaltbreiten hohe Scherkräfte mit Festkautschuk erreicht, die CNT-Agglomerate sind schon nach einem Durchgang gut dispergiert, sodass eine weitere Verringerung der Spaltbreite keine Auswirkungen auf die Speichermoduli G' hat.

### Beispiel 3: Herstellung von CNT-Masterbatches mit mittelviskosem Festkautschuk Perbunan® 2831 F und dem hochviskosen Festkautschuk Perbunan® 2870F mit dem Dreiwalzenwerk (nicht erfindungsgemäß)

Um staubfreie CNT-Vorbatches herzustellen wurde CNT-Pulver (20 Gew.-%) mit Wasser (80 Gew.-%) mit einem Spatel vermischt. Es entstand eine feuchte, zähe Masse. Diese feuchte, zähe Masse wurde jeweils zu Perbunan® 2831 F und Perbunan® 2870 F in den Innenmischer gegeben und für ca. 30 min. eingearbeitet bis das Wasser bei einer Temperierung von 100°C nahezu vollständig verdampft war. Es wurde bei 50 U/min. gearbeitet. Der Füllgrad des Innenmischers betrug 75% bezogen auf den Feststoffanteil (ohne Wasser). Auf diese Art und Weise wurden 2 Vorbatche mit 20% CNTs für MB3.1 und MB3.2. erhalten.

Zur Verbesserung der Verarbeitbarkeit auf dem Dreiwalzwerk von Festkautschuken wurde dieses Mal nicht getempert sondern die Walzen des Dreiwalzwerkes auf 150°C geheizt. Die Vorbatche wurde über ein Dreiwalzenwerk mit den in Tabelle 2 angegebenen Spaltbreiten für die Durchgänge 1 bis 3 gegeben: Das Geschwindigkeitsverhältnis der drei Walzen (Aufgabewalze, Mittelwalze, Abnahmewalze) betrug wie in Beispiel 2 1:3:9. Die Umlaufgeschwindigkeit betrug 100 U/min für die Abnahmewalze. Die Vorbatche wurden jeweils dreimal über das Dreiwalzenwerk gegeben und so die Masterbatch mit den dispergierten CNTs erhalten. Die eingestellten Spaltbreiten sowie alle weiteren Parameter, inklusive der Messergebnisse sind in der Tabelle 2 dargestellt.

Nach jedem Walzendurchgang wurde wie in Beispiel 2 eine Probe entnommen und die rheologischen Eigenschaften mit dem RPA2000 von Alpha Technologies getestet. Hierzu wurde bei 100°C und einer Frequenz von 0,5 Hz die Dehnungsamplitude schrittweise von ca. 0,3% bis auf ca. 950% erhöht. Die Messung dieses Strainsweeps wurde sofort nach Abschluss der ersten Messung noch einmal wiederholt.

Die Speichermoduli G' des zweiten Strainsweeps sind bei 1%, 10%, 100% Dehnungsamplitude in der Tabelle 2 dargestellt. Es zeigt sich, dass sich der 20%-ige Masterbatches mit Perbunan® 2870F MB2.2 aus Beispiel 2 nur unwesentlich von MB3.2 aus Beispiel 3 unterscheidet. Dies zeigt, dass die unterschiedliche Prozessführung bei der Herstellung des Vorbatche im Innenmischer und der Dispergiervorgang bei unterschiedlichen Walzentemperaturen auf dem Dreiwalzenwerk (unterschiedliche Temperierung) nur einen geringfügigen Einfluss hat.

Wie erwartet liegen die Speichermoduli G'(1%), G'(10%) sowie G'(100%) des Masterbatches mit Perbunan 2831F MB3.1 signifikant unterhalb denjenigen des Masterbatches MB3.2 und MB2.2 mit dem Perbunan® 2870 F . Dies liegt an der niedrigeren Mooney-Viskosität von 31 MU beim Perbunan® 2831 F gegenüber 70 MU bei Perbunan® 2870 F. Je höher die Viskosität des kautschukhaltigen Bindermaterials desto höher sind die Speichermoduli G' bei allen Dehnungsamplituden (1% bis 100%). Die Dispergierung der CNT-Agglomerate unterscheidet sich demnach, wenn überhaupt dann nur unwesentlich in den beiden Festkautschuktypen.

### Beispiel 4: Herstellung von CNT-Masterbatches mit Flüssigkautschuk Nipol 1312® mit dem Dreiwalzenwerk (erfindungsgemäß)

Analog zum Beispielen 1 wurden ein 15% und zwei 20%-ige Vorbatche (MB4.1 bis MB4.3) mit Nipol® 1312 hergestellt. Die Einarbeitung erfolgte mit Hilfe eines Spatels. Da die Vorbatche ausschließlich mit Flüssigkautschuk Nipol 1312® als Bindermaterial aufgrund der relativ geringen Viskosität nicht im Innenmischer dispergiert werden konnten (vgl. Beispiel 1). Analog zu den Beispielen 2 und 3 wurden die Masterbatches jeweils dreimal über den Dreiwalzenwerk gegeben. Die eingestellten Spaltbreiten sowie alle weiteren Parameter, inklusive der Messergebnisse sind in der Tabelle 2 dargestellt.

Die niedrig viskosen Vorbatche mussten nicht getempert werden. Zum Vergleich wurde jedoch auch der MB4.1 mit einer Temperierung des Dreiwalzwerkes bei 150°C hergestellt. Anders als beim Festkautschuk ließ sich bei Flüssigkautschuk eine höhere Drehzahl der Abnahmewalze von 300 U/min. einstellen.

Es zeigte sich, dass mit zunehmendem Anteil an CNTs im Masterbatch die Speichermoduli bei allen Dehnungsamplituden zunahmen (MB4.2 und MB4.3), wie in den Beispiel 2 (MB2.1 bis MB2.3), zunehmen. Mit höheren Anteil an CNTs nimmt der Verstärkungseffekt zu.

Die Temperierung der Walzen (Vergleich MB4.1 und MB4.3) spielt offensichtlich, wie im Beispiel 3, nur eine geringe Rolle. Die Werte unterscheiden sich wenig.

Im Gegensatz zu Beispiel 2 nahmen die Speichermoduli (MB4.2) allerdings mit abnehmender Spaltbreite insbesondere bei sehr kleinen Walzenspalten deutlich zu. Der Effekt ist am höchsten bei kleinen Dehnungsamplituden von ca. 1%. Dies kann auf eine vollständigere Dispersion der CNT-Agglomerate bei kleineren Spaltbreiten im Flüssigkautschuk zurückgeführt werden. Mit abnehmender Spaltbreite werden mehr und mehr CNTs vereinzelt. Durch die Vereinzelung wird das Verstärkungspotential der CNTs im kautschukhaltigen Binder erhöht, Das Speichmodul G'(1%) wurde erhöht. Daraus ist zweifelsfrei ableitbar, dass die Dispergierung mittels Dreiwalzenwerk mit Spaltbreiten ≤ 120 µm eine schonende Art der Dispergierung ermöglicht. Zudem zeigte sich sehr überraschenderweise, dass die Speichermoduli G'(1%) der Masterbatches (MB4.1 und MB4.3) mit Flüssigkautschuk bei kleinen Dehnungsamplituden deutlich größer sind als diejenigen der CNT-Masterbatches mit Festkautschuk (MB2.2 MB3.1 und MB3.2) bei einem gleichen CNT-Anteil von 20 Gew.%, obwohl die Viskosität des Flüssigkautschuk deutlich geringer ist als die Festkautschuks. Die hohen Speichermoduli G'(1%) der Masterbatche MB4.1 und MB4.3 können nur mit einem außergewöhnlich hohen Verstärkungspotential der CNTs nach der Dispergierung auf dem Dreiwalzenwerk in einem Flüssigkautschuk erklärt werden. Dagegen hat in Beispiel 3 der Masterbatch MB3.1 mit der geringeren Viskosität des Festkautschuks wie erwartet auch einen geringeren Wert für G'(1%) als derjenige Masterbatch MB3.2 mit dem Festkautschuk mit höherer Mooney-Viskosität (vgl. Beispiel 3).

Bei großen Dehnungsamplituden >>1% hingegen kehrte sich der Effekt um. Hier ist der G'(100%) für die Masterbatches MB4.1 und MB4.3 deutlich geringer als bei MB2.2 , MB3.1 und MB3.2. Bei großen Amplituden brach das Netzwerk aus CNTs auf, da es im Gegensatz zu dem Kautschuk nicht so stark dehnbar ist. Daher ist der Einfluss der Viskosität des Binders bei großen Dehnungsamplituden deutlich größer.

Dies alles zeigt, dass die CNTs überraschenderweise ausschließlich im Flüssigkautschuk schonend dispergiert werden können. Offenbar werden bei der Dispergierung der Agglomerate im Flüssigkautschuk die CNTs nur wenig verkürzt, sodass die CNTs ein deutlich höheres Verstärkungspotential, Werte für G'(1), aufweisen als die CNTs dispergiert in Festkautschuk. Offenbar werden im Gegensatz zur Dispergierung der CNTs in Festkautschuk diese stark verkürzt.

Neben den deutlich erhöhten Verstärkungseigenschaften, ausgedrückt durch große Werte für G'(1%) für MB4.1 bis MB4.3, sind die geringen Moduli G'(100%) beim Einmischen der Masterbatche in Kautschukmischungen vorteilhaft, da beim Einmischen die Masterbatche hohen Dehnungsamplituden ausgesetzt werden. Zudem ist große G'(1%) vorteilhaft beim Handling der Masterbatches, vor allem wenn die Masterbatches als Granulat vorliegen. Die Granulen müssen formstabil sein und bei Lagerung nicht zusammen klumpen. Hier hilft ein hoher Wert für G'(1%).

Die Vorteile von schonend dispergierten CNTs mit hohem Verstärkungspotential in Elastomeren gegenüber herkömmlichen Füllstoffen, wie Ruß ,werden in Beispiel 6 aufgezeigt.

### Beispiel 5: Herstellung von Ruß-Masterbatches mit Flüssigkautschuk mit dem Dreiwalzenwerk (nicht erfindungsgemäß)

Die Herstellung des 15%igen-Rußmasterbatches (MB5.1) mit Flüssigkautschuk erfolgte entsprechend Beispiel 4, wobei anstelle von CNTs dann Ruß eingesetzt wurde. Entgegen dem 15%-CNT-Masterbatch MB4.2 aus Beispiel 4 nahmen die Speichermoduli mit abnehmenden Walzenspaltbreiten ab. Dies entspricht dem Verhalten von herkömmlichen Füllstoffen. Zunächst nahm der G'(1%) mit zunehmender Dispergierung zu. Die Rußagglomerate wurden zerrieben und die Rußpartikel vereinzelt. Ab einem gewissen Zeitpunkt bei Mischprozess nahm der Speichermodul G'(1%) dann aber wieder ab. Dies entspricht einer gleichmäßigeren Verteilung von dispergierten Rußpartikeln auf mikroskopischen Dimensionen. Der mittlere Abstand von Rußpartikeln nahm mit zunehmender Homogenität (Gleichmäßigkeit der räumlichen Verteilung) zu. Damit wurde die Wechselwirkung der Rußpartikel zueinander reduziert und der G'(1%) sank.

In allen Fällen waren aber die Werte für die Speichermoduli G' des MB5.1 mit Ruß bei allen Dehnungsamplituden zwischen 1%, und 100% gegenüber dem Masterbatch MB4.2 mit CNTs deutlich reduziert. Nach drei Walzendurchgängen ist der Speichermodul G'(1%) des 15%-Rußmasterbatches sogar um einen Faktor drei niedriger als der vergleichbare Masterbatch mit Flüssigelastomer. Dies zeigt, dass außergewöhnliche Verstärkungspotential von schonend dispergierten CNT-Agglomeraten gegenüber herkömmlichen Füllstoffen, wie Ruß.

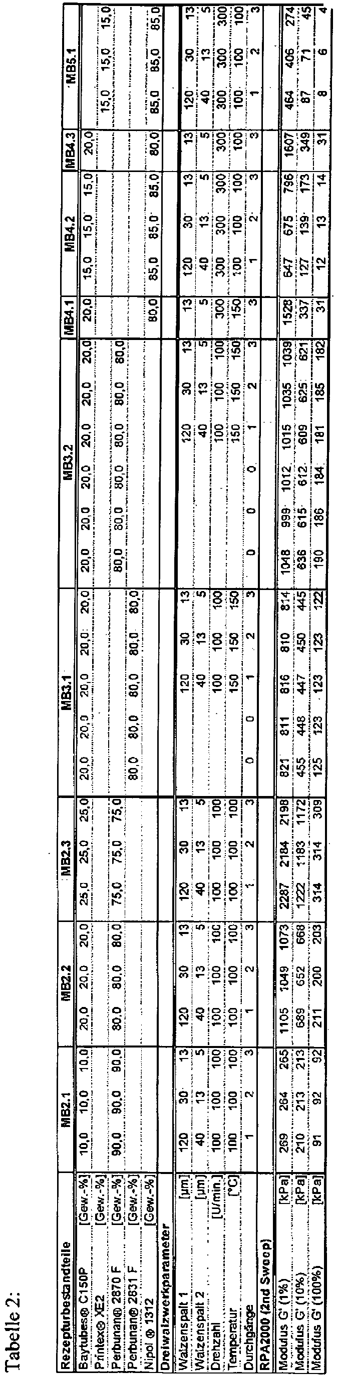

### Beispiel 6: Herstellung von Vulkanisaten mit CNT- (erfindungsgemäß) und Ruß-Masterbatches (nicht erfindungsgemäß)

Entsprechend der Beispiele 4 und 5 wurden zwei 15% ige -Vorbatche durch Einrühren von Printex XE2® und Baytubes® C150P in den Flüssigkautschuk Nipol® 1312 bei Temperaturen von ca. 60°C hergestellt. Diese beiden Vorbatche wurde im 1,5 1 Innenmischer der Firma Gumix S.A. bei einer Temperierung von (50°C und 50 U/min.) jeweils mit weiterem NBR-Perbunan® 28120 F verschnitten (Mengenverhältnis entsprechend Tabelle 3). Die Mischzeit betrug ca. 5 bis 10 min.. Auf einem Zweiwalzenwerk der Firma Rubicon Gummimischtechnik und Maschinenbau GmbH wurde das Vernetzungsmittel Perkadox® 14-40 während ca. 5 min eingearbeitet.

Die mit dem Dreiwalzenwerk mit drei Walzendurchgängen und einer minimalen Spaltbreite von 5 µm, hergestellten CNT- und Ruß-haltigen Masterbatche MB4.2 und MB5.1 aus Beispiel 4 bzw. Beispiel 5 wurden auf der Walze mit dem Festkautschuk Perbunan® 28120F auf dem Zweiwalzenwerk der Firma Rubicon Gummimischtechnik und Maschinenbau GmbH für ca. 5 min. verschnitten und homogenisiert. Anschleißend wurde das Vernetzungsmittel Perkadox® 14-40B-GR hinzugegeben und in die Kautschukmischung eingearbeitet. Die Rezepturen aller Kautschukmischungen sind in Tab. 3 aufgelistet. Die Vulkanisate für die mechanischen Prüfungen wurden für ca.10 min. (1,5 * RheoTC90) in einer Vulkanisationspresse hergestellt. Es wurde die Härte, die Rückprallelastizität, der Weiterreisswiderstand nach Graves ermittelt, der Druckverformungsrest nach 24 h bei 25% Verformung bei 100°C und Zugversuche durchgeführt nach den dem Fachmann bekannten Verfahren ermittelt. Die Werte sind in Tab. 3 aufgelistet.

Tabelle 3 zeigte eindeutig, dass sich durch den Einsatzes eines Dreiwalzewerkes im Vergleich zur Dispergierung die Homogenität der Proben insbesondere mit CNTs (aber auch mit Ruß) erhöht. Die Standardabweichung der Bruchdehnung aus den 10 Zugversuchen ist eindeutig kleiner sowohl für die Ruß- als CNT-haltige Vulkanisate, wenn die Masterbatche mit einem Dreiwalzwerk hergestellt wurden. Zudem nahm die Bruchdehnung und die Zugfestigkeit (für CNTs) deutlich zu, was auf einen niedrigen Anteil an großen Agglomeraten schließen lässt. Große Agglomerate stellen im Elastomer potentielle Bruchstellen dar, daher müssen diese in technischen Elastomerprodukten unbedingt vermieden werden, da sie zum Ausfall von Bauteilen führen können. Der Druckverformungsrest wurde ebenfalls reduziert, was erwünscht ist. Diese Vorteile durch Verwendung des Dreiwalzwerkes überwiegen den nachteiligen Effekt einer optimierten Dispersion auf den leicht reduzierten Weiterreiswiderstand und die leicht reduzierte Härte sowie den leicht reduzierten Spannwert bei 100%.

Beim Vergleich der Vulkanisate mit Ruß und CNTs dispergiert mit dem Dreiwvalzwerk zeigte sich entsprechend den höheren Werten für die Speichermoduli der CNT-haltigen Masterbtaches MB4.2 und MB5.1, dass die Härte, die Spannwerte bei 100% Dehnung und der Weiterreisswiderstand der CNT-haltigen Vulkanisate gegenüber den Vulkanisaten mit Ruß bei gleichen Gew.-Anteilen signifikant erhöht sind. Gleichzeitig sind keine nachteiligen Effekte (Reduktion) durch den Einsatz von CNTs auf die Rückprallelastizität zu beobachten. Der Druckverformungsrest ist nur geringfügig im Rahmen üblicher Messwertschwankungen erhöht. Dies war sehr überraschend, da bei Erhöhung der Härte von Vulkanisaten durch herkömmliche Füllstoff wie Ruße, auch die Rückprallelastizität erniedrigt sowie der Druckverformungsrest erhöht wurde. Dies zeigt, das außergewöhnliche Verstärkungspotential dei nanoskaligen Fasern gegenüber dem herkömmlichen Ruß.

Die im Vergleich zu den Vulkanisaten mit Ruß reduzierte Bruchdehnung der CNT-Vulkanisate ist auf das hohe Verstärkungspotential der CNTs zurückzuführen. Vulkanisate mit erhöhter Härte bzw. Spannwert weisen im Allgemeinen geringere Werte für die Bruchdehnung auf. Eine reduzierte Härte kann leicht durch den Einsatz eines geringeren Anteils an CNTs im Vulkansiat erreicht werden.

**Tab 3**

| | | **ohne DWW** | **mit DWW** | **ohne DWW** | **mit DWW** |
|---|---|---|---|---|---|
| **Rezeptur** | | | | | |
| Perbunan® 28120F | [phr] | 56,7 | 56,7 | 56,7 | 56,7 |
| Nipol® 1312 | [phr] | 43,3 | 43,3 | 43,3 | 43,3 |
| Perkadox® 14-40B-GR | [phr] | 4,4 | 4,4 | 4,4 | 4,4 |
| Printex ®XE2 | [phr] | 10,0 | 10,0 | | |
| Baytubes ® C150P | [phr] | | | 100 | 10,0 |
| **Mechanische Werte** | | | | | |
| Härte Shore A | [HE] | **41** | **39** | **51** | **49** |
| Rückprallelastizität | [%] | 25 | 28 | 28 | 28 |
| Zug-WW max Mittel | [Nm] | 6,5 | 6 2 | 7,1 | 6,8 |
| DVR 25% 100°C 24h MW | [%] | 16 | 14 | 18 | 15 |
| Zug S 100% Mittel | [MPa] | 1,3 | 1,0 | 2,8 | 2,3 |
| Zugfestigkeit Mittel | [MPa] | 5,2 | 5,1 | 43 | 5,3 |
| Zug Bruchdehnung Mittel | [%] | 293 | 332 | 152 | 207 |
| Std. -abw. | | 12,2% | 4,2% | 11,4% | 33% |

| | | | | | |
|---|---|---|---|---|---|
| DWW = Dreiwalzenwerk Std -abw = Standard-Abweichung | | | | | |

## Patentansprüche

1. Verfahren zur Herstellung von Carbonanotubes-haltigen Masterbatches, **dadurch gekennzeichnet, dass** mindestens ein Kautschuk mit einer mittleren Molaren Masse (Gewichtsmittel) von 500 g/mol bis 200.000 g/mol mit Carbonanotubes bei T ≥ 0°C vermischt wird und anschließend die Carbonanotubes-Agglomerate mit einem Dreiwalzenwerk mit Spaltbreiten ≤ 120 µm dispergiert werden.

2. Verfahren nach Anspruch 1, **dadurch gekennzeichnet, dass** die Carbonantubes mit einem Dreiwalzenwerk bei T≥ 0°C dispergiert werden.

3. Verfahren nach einem der Ansprüche 1 bis 2, **dadurch gekennzeichnet, dass** es sich bei dem Kautschuk um Isoprenkautschuk (IR), hydrierten Isoprenkautschuk, Styrol-Butadien-Kautschuk (SBR), Butadienkautschuk (BR), Isopren-Isobutylen-Kautschuk (IIR), Polychloroprenkautschuk (CR), Acrylnitril-Butadien-Kautschuk (NBR), hydrierter Acrylnitril-Butadien-Kautschuk (HNBR), Ethylen-Propylen-Dien-Kautschuk (EPDM), Ethylen-Propylen-Kautschuk (EPM), Siliconkautschuk (VMQ)und/oder Fluorkautschuk (FKM) handelt.

4. Verfahren nach einem oder mehreren der Ansprüche 1 bis 3, **dadurch gekennzeichnet, dass** es sich bei den Carbonanotubes um single-wall, double wall oder multi wall CNT's handelt.

5. Verfahren nach einem oder mehreren der Ansprüche 1 bis 4, **dadurch gekennzeichnet, dass** der Anteil der Carbonanotubes im Masterbatch 5.- 50 Gew.-% beträgt.

6. Verfahren nach einem der Ansprüche 1 bis 5, **dadurch gekennzeichnet, dass** anschließend die Carbonanotubes-haltigen Masterbatches durch Vernetzungsmittel mit dem Kautschuk einer Kautschukmischung vernetzt werden.

## Claims

1. Process for producing masterbatches containing carbon nanotubes, **characterized in that** at least one rubber having an average molar mass (weight average) of 500 g/mol to 200 000 g/mol is mixed with carbon nanotubes at T ≥0°C and then the agglomerates of carbon nanotubes are dispersed with a three-roll mill having gap widths of ≤ 120 µm.

2. Process according to Claim 1, **characterized in that** the carbon nanotubes are dispersed with a three-roll mill at T ≥0°C.

3. Process according to either of Claims 1 and 2, **characterized in that** the rubber is isoprene rubber (IR), hydrogenated isoprene rubber, styrene-butadiene rubber (SBR), butadiene rubber (BR), isoprene-isobutylene rubber (IIR), polychloroprene rubber (CR), acrylonitrile-butadiene rubber (NBR), hydrogenated acrylonitrile-butadiene rubber (HNBR), ethylene-propylene-diene rubber (EPDM), ethylene-propylene rubber (EPM), silicone rubber (VMQ) and/or fluoro rubber (FKM) .

4. Process according to one or more of Claims 1 to 3, **characterized in that** the carbon nanotubes are single-wall, double-wall or multi-wall CNTs.

5. Process according to one or more of Claims 1 to 4, **characterized in that** the proportion of carbon nanotubes in the masterbatch is 5-50% by weight.

6. Process according to any of Claims 1 to 5, **characterized in that** the masterbatches containing carbon nanotubes are subsequently crosslinked by crosslinking agents with the rubber in a rubber mixture.

## Revendications

1. Procédé pour la fabrication de lots-maîtres contenant des nanotubes de carbone, **caractérisé en ce qu'**au moins un caoutchouc présentant une masse molaire moyenne (moyenne pondérale) de 500 g/mole à 200 000 g/mole est mélangé avec des nanotubes de carbone à T ≥ 0°C et les agglomérats de nanotubes de carbone sont ensuite dispersés à l'aide d'un broyeur à trois cylindres présentant des largeurs de fente ≤ 120 µm.

2. Procédé selon la revendication 1, **caractérisé en ce que** les nanotubes de carbone sont dispersés à l'aide d'un broyeur à trois cylindres à T ≥ 0°C.

3. Procédé selon l'une quelconque des revendications 1 à 2, **caractérisé en ce qu'**il s'agit, pour le caoutchouc, d'un caoutchouc d'isoprène (IR), d'un caoutchouc d'isoprène hydrogéné, d'un caoutchouc de styrène-butadiène (SBR), d'un caoutchouc de butadiène (BR), d'un caoutchouc d'isoprène-isobutylène (IIR), d'un caoutchouc de polychloroprène (CR), d'un caoutchouc d'acrylonitrile-butadiène (NBR), d'un caoutchouc d'acrylonitrile-butadiène hydrogéné (HNBR), d'un caoutchouc d'éthylène-propylène-diène (EPDM), d'un caoutchouc d'éthylène-propylène (EPM), d'un caoutchouc de silicone (VMQ) et/ou d'un caoutchouc fluoré (FKM).

4. Procédé selon l'une ou plusieurs des revendications 1 à 3, **caractérisé en ce qu'**il s'agit, pour les nanotubes de carbone, de nanotubes de carbone à paroi unique, à double paroi ou à paroi multiple.

5. Procédé selon l'une ou plusieurs des revendications 1 à 4, **caractérisé en ce que** la proportion de nanotubes de carbone dans le lot-maître est de 5-50% en poids.

6. Procédé selon l'une quelconque des revendications 1 à 5, **caractérisé en ce que** les lots-maîtres contenant les nanotubes de carbone sont ensuite réticulés par des réticulants avec le caoutchouc d'un mélange de caoutchoucs.
